# EUROPÄISCHE PATENTSCHRIFT

(11) **EP 1 623 883 B1**
(45) Veröffentlichungstag und Bekanntmachung des Hinweises auf die Patenterteilung: **09.04.2014**
(21) Anmeldenummer: 05008603.2
(22) Anmeldetag: 20.04.2005
(51) Int. Cl.: B60R 21/20, B29C 59/00

(54) **Überzug für die Abdeckung eines Airbags**
Cover for an airbag housing
Couvercle pour module d'airbag

(30) Priorität: 05.08.2004 DE 102004038314
(43) Veröffentlichungstag der Anmeldung: 08.02.2006
(73) Patentinhaber: Eissmann Automotive Deutschland GmbH, 72574 Bad Urach (DE)
(72) Erfinder: Kaulbersch, Nicole, 70771 Leinfelden (DE)
(74) Vertreter: Mammel, Ulrike

(56) Entgegenhaltungen:
- EP-A- 0 711 627
- EP-A- 1 493 548
- WO-A-97/03866
- DE-A1- 10 055 546
- US-A- 5 084 122
- US-A- 5 968 381
- US-A- 6 099 026
- US-A1- 2002 043 144

## Beschreibung

Airbags sind heutzutage in Kraftfahrzeugen an verschiedenen Stellen, z. B. in Lenkrädern, Armaturenbrettern, Türen, Sitzen, Dachverkleidungen usw. integriert. Für eine zuverlässige Funktionsweise des Airbags ist die beste Lösung, den Überzug für die Abdeckung des Airbags im Bereich der Airbagklappe mit einer so genannten Airbagdokumentationsnaht zu versehen, sodass sich diese bei einem Aufprall ungehindert öffnen und der Airbag sich entfalten kann.

Aus optischen beziehungsweise designtechnischen Gründen fordern jedoch die Kraftfahrzeughersteller zunehmend, dass beispielsweise der Beifahrerairbag, der im Armaturenbrett integriert ist, nach außen hin derart abgedeckt wird, dass sein Vorhandensein nicht mehr zu sehen ist. Dazu wird das Armaturenbrett mit der darin integrierten Airbagklappe mit einem Überzug versehen. Dieser Überzug muss allerdings im Bereich der Berandung der Airbagklappe eine Schwächung aufweisen, so dass die Öffnung der Airbagklappe und die Entfaltung des Airbags bei einem Aufprall gewährleistet bleibt. Zur Schwächung des Überzugs sind verschieden Verfahren vorgeschlagen worden. So ist es bereits bekannt, Überzüge aus Leder oder Kunstleder von der Rückseite her einzuritzen, um eine Materialschwächung zu erreichen. Auch Schwächungsmethoden, die chemisch beziehungsweise mit Hilfe eines Laserstrahls das Bezugmaterial auflösen, abtragen beziehungsweise verdampfen, sind bereits bekannt. In der EP 1 213 193 A1 wurde außerdem vorgeschlagen, den Überzug zu perforieren. Um die Perforationsöffnungen auf der Sichtseite zu kaschieren, werden die Öffnungen nach dem Einbringen wieder verfüllt.

Aus der US 2002/0043144 A1 ist ein Airbagüberzug bekannt, der eine Trägerschicht und eine Dekorschicht über der Trägerschicht umfasst, wobei eine Schwächungslinie durch die Trägerschicht hindurch und in die Dekorschicht geschnitten wird, wobei die Schnitttiefe relativ zu dem Träger kontrolliert wird, so dass das Schneidwerkzeug die Dekorschicht nicht vollständig durchdringt (Restwandschwächung).

Schwächungen des Überzugmaterials durch Einritzen haben den Nachteil, dass die Kerbe bei einem tiefen Einschnitt aufklafft und somit die Kerbe auch auf der Sichtseite des Überzugs im Laufe der Zeit durch die Temperaturwechsel, denen der Überzug im Kraftfahrzeug unterworfen ist, sichtbar wird. Bei geringeren Schnitttiefen wird das Aufreißverhalten negativ beeinflusst.

Schwächungsmethoden, die das Bezugmaterial chemisch auflösen beziehungsweise mit Hilfe eines Laserstrahls verdampfen, sind für die Anwendung bei Naturmaterialien wie Leder nicht geeignet. Die Ränder der verdampften, aufgelösten, abgetragenen Bereiche verhärten und/oder reagieren unter Klimaeinwirkungen mit Materialverdichtungen. Die so entstandenen Verhärtungen/Verdichtungen werden sich auf der Sichtseite des Überzugs auf und sind deutlich sichtbar.

Bei dem Einbringen von Perforationen, bei dem die Perforationsöffnungen hinterher wieder verschlossen werden müssen, besteht der Nachteil darin, dass die Perforation nur im nicht zugerichteten Zustand des Leders eingebracht werden kann. Nach Einbringen der Perforation muss der Überzug also wieder zum Lederlieferanten zurückgebracht werden, was relativ umständlich ist.

Aus der US 6,099,026 ist eine Airbagabdeckung aus einem gewebten Textilmaterial bekannt, die mehrere parallel zueinander angeordnete Schlitze aufweist.

Airbagbezüge aus synthetischen Harzen lehrt die US 5,084,122. Diese Schrift zeigt sämtliche Merkmale des Oberbegriffs des Anspruchs 1 der vorliegenden Erfindung.

Der vorliegenden Erfindung liegt die Aufgabe zugrunde, einen Überzug für die Abdeckung eines Airbags sowie ein Verfahren zu seiner Herstellung vorzuschlagen, bei dem die Schwächung des Überzugs einfach einzubringen ist, die Schwächung ein zuverlässiges und dauerhaftes Reißverhalten gewährleistet.

Die Aufgabe wird mit einem Überzug für die Abdeckung eines Airbags im Innenraum eines Kraftfahrzeugs gelöst, der aus einem Bezugmaterial hergestellt ist, das im Bereich auf der der Berandung einer Airbagklappe zugewandten Innenseite hintereinander angeordnete, voneinander beabstandete Einstiche aufweist, wobei die hintereinander angeordneten Einstiche eine von einer Geraden abweichende Schwächungsgeometrie bilden und die Einstiche das Bezugmaterial durchdringen, wobei das Bezugmaterial Leder sein kann, die Schwächungsgeometrie eine Wellenlinie ist und zwei Schwächungsgeometrien in definiertem Abstand zueinander vorgesehen sind.

Im Gegensatz zu bekannten Perforationen können die Einstiche durch das Bezugmaterial hindurch dringen, ohne dass sie anschließend wieder verschlossen werden müssen. Das Bezugmaterial Leder kann also vollständig zugerichtet sein, bevor die Einstiche eingebracht werden. Die längliche Ausdehnung der Einstiche erleichtert außerdem das Aufreißen des Überzugs. Im Gegensatz zum Einschneiden von Kerben klaffen die Einstichöffnungen auf der Fleischseite nicht auf, sondern schließen sich fast vollständig wieder, so dass sie trotz hoher Wirksamkeit optisch nicht auffallen. Durch die Ausrichtung der Schwächungsgeometrien, die von einer Geraden abweichen, d.h. Wellenform, wird ein Aufreißverhalten erzeugt, das dauerhaft ein sicheres Ansprechverhalten unter einer gewünschten Belastung gewährleistet.

Vorzugsweise können die Einstiche regelmäßig voneinander beabstandet sein, um gleichmäßige Aufreißverhältnisse entlang der gesamten Berandung der Airbagklappe zu erreichen. Eine partielle Verdichtung der Einstiche auf einer besonders zu bevorzugenden Stelle kann das Aufreißverhalten in diesem Bereich ebenfalls positiv beeinflussen. Die Längenausdehnung der Einstiche kann beispielsweise zwischen 0,1 mm und 1 mm liegen.

Der gegenseitige Abstand der Einstiche lässt sich in der Größenordnung der Längenausdehnung der Einstiche wählen, er kann aber auch kleiner oder größer sein. Auch bei den Abständen sind daher vorzugsweise Maße von 0,1 mm bis 1 mm möglich.

Die Einstiche sind auf zwei Schwächungsgeometrien in definiertem Abstand zueinander vorgesehen, und vorzugsweise auf mehreren parallelen Schwächungsgeometrien angeordnet, wobei die Einstiche auf benachbarten Schwächungsgeometrien versetzt zueinander angeordnet sind. Durch das Vorsehen der mehreren Schwächungsgeometrien und die versetzte Anordnung der Einstiche sowie die Ausrichtung der Einstechnadel für ein gewünschtes Linienbild einer Schwächungsgeometrie (Drehung der Einstechnadel) kann die Zuverlässigkeit des Aufreißens des Überzugs noch erhöht werden.

Das Bezugmaterial selbst kann eine Dicke von beispielsweise 0,4 mm bis 1,5 mm aufweisen.

Die Erfindung betrifft auch ein Verfahren zur Herstellung eines Überzugs für die Abdeckung eines Airbags im Innenraum eines Kraftfahrzeugs nach einem der Ansprüche 1-12, das dadurch gekennzeichnet ist, dass von der Innenseite des Bezugmaterials (Fleischseite des Leders) her in dessen unkaschiertem Zustand in dem Bereich, der nach dem Aufkaschieren des Bezugmaterials auf die Abdeckung des Airbags die Berandung der Airbagklappe abdeckt, senkrecht hintereinander angeordnete, voneinander beabstandete Einstiche in das Bezugmaterial eingebracht werden, die das Bezugmaterial durchdringen.

Die Schwächung eines Verbundes aus zwei fest miteinander verbundenen Materialschichten, wobei die eine Materialschicht aus einem automobilen Dekormaterial (Leder, Kunstleder o. ä.) und die zweite Materialschicht aus einem Schaum, Abstandsgewirk o. ä. besteht, ist nach beschriebenem Verfahren ebenfalls möglich.

Zur Herstellung der Einstiche kann eine Einstechnadel verwenden werden, die eine längliche, schneidenartige Spitze aufweist. Bei Einstichen, die in Linienform ein beliebiges Muster darstellen können, wird die Einstechnadel bei fortlaufenden Einstichen immer so gedreht, dass sie auf die zu erzielende Linienform ausgerichtet ist, d. h., möglichst exakt die gewünschte Linienform nachvollzieht oder weitestgehend deckungsgleich zur gewünschten Linienform ausgerichtet ist.

Nachfolgend wird ein bevorzugtes Ausführungsbeispiel eines erfindungsgemäßen Überzugs anhand der Zeichnung näher beschrieben.

Es zeigt:
- Figur 1: Einen Querschnitt durch einen erfindungsgemäßen Überzug, der mittels Einstechnadel durchstochen wird,

- Figur 2: eine Draufsicht auf die Innenseiten der Teilausschntitte des Überzugs aus Figur 1 mit Einstichen, die von einer Geraden abweichend Schwächungsgeometrien bilden,
- Figur 3: eine Draufsicht auf die Innenseite eines Teilausschnitts eines Überzugs mit wellenförmigen Schwächungsgeometrien und
- Figur 4: eine Front- und eine Seitenansicht einer Einstechnadel zum Einbringen von Einstichen in den Überzug.

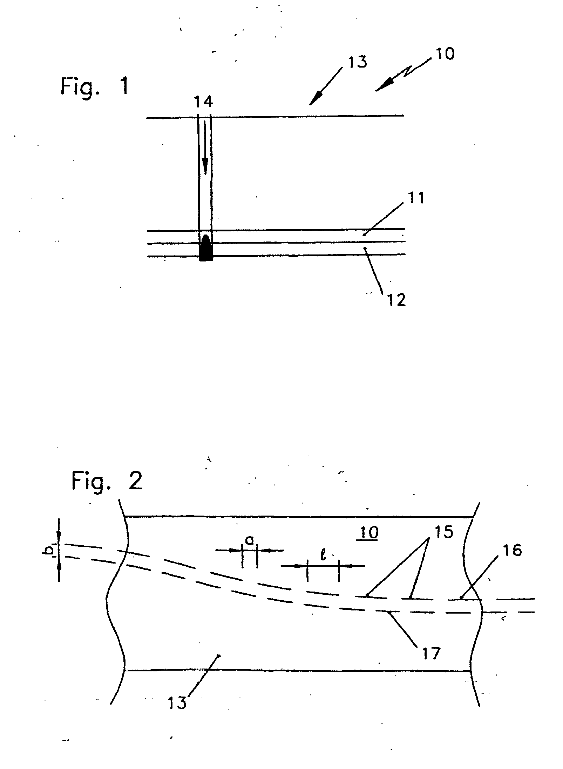

Die Figur 1 zeigt im Querschnitt ein Bezugmaterial 10 aus Leder, dessen Hautschicht 11 bereits zugerichtet und mit einer Farbschicht 12 versehen ist. Von der Innenseite 13 (Fleischseite des Leders), die auch als Veloursseite bezeichnet wird, werden mit Hilfe einer Einstechnadel 14 Einstiche 15 eingebracht, die durch senkrechtes Einführen der Einstechnadel 14 in die Innenseite 13 erzeugt werden, wobei die Einstiche 15 in Figur 1 nur die Hautschicht 11 und die Farbschicht 12 vollständig durchdringen.

Wie Figur 2 erläutert, können die mit Hilfe der Einstechnadel 14 eingebrachten Einstiche 15 auf einer oder mehreren parallelen Linien 16, 17 liegen, die von einer Geraden abweichende Schwächungslinien bilden, wobei die Länge der Einstiche 15 ungefähr dem Abstand a zwischen zwei Einstichen 15 entsprechen kann. Der Abstand b der beiden Linien 16 und 17 ist im dargestellten Beispiel ungefähr ein Viertel so groß wie die Länge l der Einstiche 15. Hier sind jedoch beliebige Variationen möglich. Im dargestellten Beispiel sind außerdem die Einstiche 15 der Linien 16 und 17 gegeneinander versetzt. Diese Anordnung ist günstig, um das Aufreißverhalten positiv zu beeinflussen.

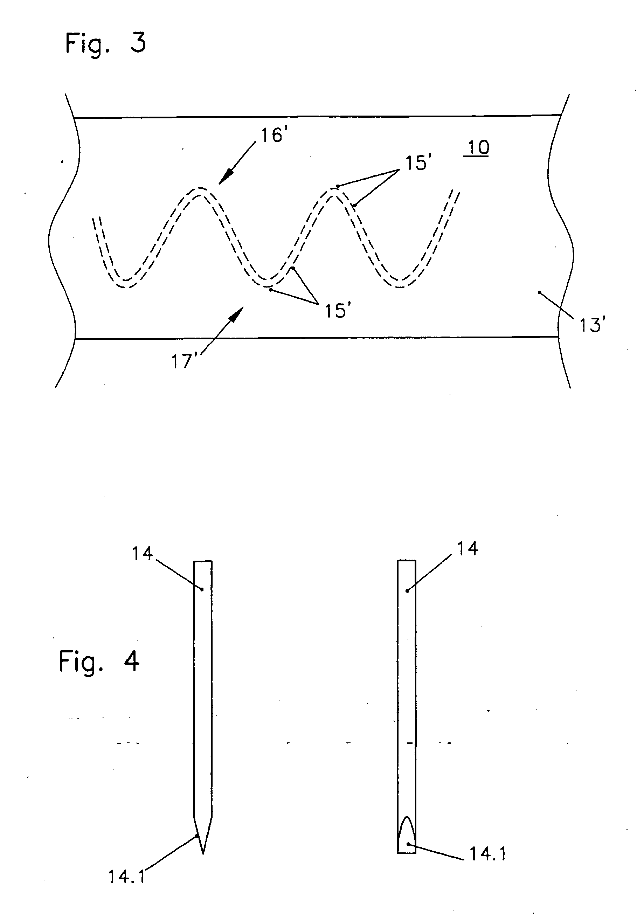

Fig. 3 zeigt wie Fig. 2 eine Draufsicht auf einen Teilausschnitt eines Bezugmaterials 10, insbesondere ein automobiles Dekormaterial wie Leder, Kunstleder, Stoff oder dergleichen. Schwächungslinien 16' und 17' sind wellenförmig ausgebildet, und die Einstiche 15' sind derart gesetzt, dass sich die Einstechnadel 14 stets bei fortlaufenden Einstichen 15' so weit dreht, dass sich eine gewünschte Wellenform oder eine andere beliebige Form von einer oder von mehreren Schwächungslinien 16' und 17' erzeugen lassen. Über die Einstiche 15' können gewünschte Perforierungen hergestellt werden, die ein gleichmäßiges Aufreißverhalten unter Belastung zeigen. Die Perforierungen sind so gewählt, dass sie, auch wenn sie das Bezugmaterial 10 aufgrund von Einstichen 15' vollkommen durchdringen, nicht sichtbar sind.

Die erfindungsgemäßen Einstiche erfolgen in das Bezugmaterial 10 immer im unkaschierten Zustand des Bezugmaterials 10 von der Innenseite 13, 13' (Fleischseite).

Fig. 4 zeigt die Einstechnadel 14 zur Erzeugung der Einstiche 15 in der Seitenansicht und in der Vorderansicht. Die Einstechnadel 14 weist an ihrer Spitze eine schneidenartige Verjüngung 14.1 auf, die die Einstiche 15, 15' im Bezugmaterial 10 erzeugt. In der dargestellten Form weist die Einstechnadel 14 einen kreisförmigen Querschnitt auf. Es kann jedoch auch vorteilhaft sein, wenn die Einstechnadel einen quadratischen oder rechteckförmigen Querschnitt aufweist, weil in solchen Fällen die Einstechnadel immer ausgerichtet eingeklemmt werden kann. Die erfindungsgemäß verwendete Einstechnadel weist eine scharfe, bevorzugt geschliffene Schneidfläche auf.

Des Weiteren kann es vorteilhaft sein, zwei baugleiche Einstechnadeln in definiertem Abstand zueinander fest zu montieren und das Bezugmaterial so gleichzeitig auf parallelen Schwächungsgeometrien zu schwächen (Reduktion der benötigten Fertigungszeit). Die Einstechnadeln können dabei vorzugsweise in einem Abstand von 0,5 bis 1,0 mm definiert miteinander verbunden sein.

Für die Erzeugung von Schwächungsgeometrien in einem Bezugsmaterial für die Abdeckung einer Airbagklappe werden auf der Innenseite 13 des Bezugsmaterials 10 Einstiche 15 über eine Einstechnadel 14 erzeugt, wobei die Einstiche 15 über intermittierende Schritte in das Bezugsmaterial 10 von der Innenseite 13 her eingebracht werden. Die über die Einstiche 15 erzeugte Schwächungsgeometrie ist von einer Geraden abweichend gewählt, damit ein konstantes, sicheres, definiertes Aufreißverhalten des Bezugsmaterials 10 unter Belastung gewährleistet wird. Bei beliebigen Linienbildern von Schwächungsgeometrien, die über die Einstiche erzeugt werden, wird in einer bevorzugten Ausführungsform die Einstechnadel zu dem gewünschten Linienbild ausgerichtet, d. h. die Schneide der Einstechnadel fluchtet mit der zu erzeugenden Schwächungsgeometrie. Fluchten heißt in diesem Zusammenhang, dass die Schneide der Einstechnadel längs einer gewünschten Linienführung ausgerichtet ist.

## Patentansprüche

1. Überzug für die Abdeckung eines Airbags im Innenraum eines Kraftfahrzeugs, hergestellt aus einem Bezugmaterial (10), das im Bereich auf der der Berandung einer Airbagklappe zugewandten Innenseite (13; 13') hintereinander angeordnete, voneinander beabstandete Einstiche (15; 15') aufweist, wobei die hintereinander angeordneten Einstiche (15; 15') eine von einer Geraden abweichende Schwächungsgeometrie (16, 17; 16', 17') bilden und die Einstiche (15, 15') das Bezugmaterial (10) durchdringen, **dadurch gekennzeichnet, daß** die Schwächungsgeometrie eine Wellenlinie (16', 17') ist und
zwei Schwächungsgeometrien (16, 17, 16', 17') in definiertem Abstand zueinander vorgesehen sind.

2. Überzug nach Anspruch 1, **dadurch gekennzeichnet, dass** als Bezugmaterial (10) ein automobiles Dekormaterial wie Leder, Kunstleder, Stoff oder dergleichen vorgesehen ist.

3. Überzug nach Anspruch 1, **dadurch gekennzeichnet, dass** als Bezugmaterial (10) ein Verbund aus zwei fest miteinander verbundenen Materialschichten vorgesehen ist, wobei die eine Materialschicht aus einem automobilen Dekormaterial wie Leder oder Kunstleder und die zweite Materialschicht aus einem Schaum, Abstandsgewirk, Vlies oder dergleichen besteht.

4. Überzug nach einem der Ansprüche 1 bis 3, **dadurch gekennzeichnet, dass** die Einstiche (15, 15') eine längliche Ausdehnung aufweisen.

5. Überzug nach einem der Ansprüche 1 bis 3, **dadurch gekennzeichnet, dass** die Einstiche (15, 15') regelmäßig voneinander beabstandet sind.

6. Überzug nach einem der Ansprüche 1 bis 5, **dadurch gekennzeichnet, dass** die Einstiche (15, 15') an besonders zu bevorzugenden Stellen partiell verdichtet nebeneinander angeordnet sind.

7. Überzug nach einem der Ansprüche 1 bis 4, **dadurch gekennzeichnet, dass** die Einstiche (15, 15') eine Längenausdehnung (I) von 0,1 bis 1 mm aufweisen.

8. Überzug nach einem der Ansprüche 1 bis 5, **dadurch gekennzeichnet, dass** die gegenseitigen Abstände (a) der Einstiche (15, 15') in der Größenordnung der Längenausdehnung (I) der Einstiche (15, 15') liegen.

9. Überzug nach einem der Ansprüche 1 bis 8, **dadurch gekennzeichnet, dass** die Einstiche (15, 15') auf mehreren parallel zueinander liegenden Schwächungsgeometrien (16, 17; 16', 17') angeordnet sind, wobei die Einstiche (15, 15') auf benachbarten Schwächungsgeometrien (16, 17; 16', 17') versetzt zueinander angeordnet sind.

10. Überzug nach einem der Ansprüche 1 bis 9, **dadurch gekennzeichnet, dass** das Bezugmaterial (10) eine Dicke von 0,4 mm bis 1,5 mm aufweist.

11. Überzug nach einem der Ansprüche 3 bis 10, **dadurch gekennzeichnet, dass** das Bezugmaterial (10), welches aus zwei fest miteinander verbundenen Materialschichten besteht, eine Dicke von 1 mm bis 20 mm aufweist.

12. Überzug nach einem der Ansprüche 1 bis 11, **dadurch gekennzeichnet, dass** Überzug nach einem der Ansprüche 1 bis 12, **dadurch gekennzeichnet, dass** zwei Schwächungsgeometrien in einem Abstand von 0,5 bis 1,0 mm zueinander vorgesehen sind.

13. Verfahren zur Herstellung eines Überzugs für die Abdeckung eines Airbags im Innenraum eines Kraftfahrzeugs nach einem der Ansprüche 1 bis 12, **dadurch gekennzeichnet, dass** von der Innenseite (13) des Bezugmaterials (10) her in dessen unkaschiertem Zustand in dem Bereich, der nach dem Aufkaschieren des Bezugmaterials (10) auf die Abdeckung des Airbags die Berandung der Airbagklappe abdeckt, senkrecht hintereinander angeordnete, voneinander beabstandete Einstiche (15, 15') in das Bezugmaterial eingebracht werden, die das Bezugmaterial (10) durchdringen.

14. Verfahren nach Anspruch 13, **dadurch gekennzeichnet, dass** die Einstiche (15, 15') in einen Verbund, bestehend aus zwei fest miteinander verbundenen Materialschichten, einbebracht werden, wobei die eine Schicht aus einem automobilen Dekormaterial wie Leder oder Kunstleder und die zweite Materialschicht aus einem Schaum, Abstandsgewirk oder dergleichen besteht.

15. Verfahren nach einem der Ansprüche 13 oder 14, **dadurch gekennzeichnet, dass** die Einstiche (15, 15') mit Hilfe einer Einstechnadel (14), die eine längliche, schneidenartige Spitze (14.1) aufweist, eingebracht werden.

16. Verfahren nach Anspruch 15, **dadurch gekennzeichnet, dass** sich die Einstechnadel (14) bei der Herstellung einer von einer geraden Linie abweichenden Schwächungsgeometrie dreht und mit der gewünschten Linienführung fluchtet.

17. Verfahren nach einem der Ansprüche 15 oder 16, **dadurch gekennzeichnet, dass** sich die Einstechnadel (14) bei der Herstellung einer von einer geraden Linie abweichenden Schwächungsgeometrie in einer definierten Hoch-Tief-Bewegung intermittierend stanzend vorwärts bewegt.

18. Verfahren nach einem der Ansprüche 13 bis 17, **dadurch gekennzeichnet, dass** mit Hilfe zweier in einem festen gegenseitigen Abstand, insbesondere von 0,5 - 1 mm, angeordneten Einstecknadeln (14) zwei parallele Schwächungsgeometrien gleichzeitig in das Bezugsmaterial (10) eingebracht werden.

## Claims

1. Cover for covering an airbag in the interior of a motor vehicle, said cover being produced from a cover material (10) which has mutually spacedapart punctures (15; 15') arranged consecutively in the region on the inside (13; 13') facing the edge of an airbag flap, wherein the consecutively arranged punctures (15; 15') form a weakening geometry (16, 17; 16', 17') differing from a straight line, and the punctures (15, 15') penetrate the cover material (10), **characterized in that** the weakening geometry is a wavy line (16', 17') and two weakening geometries (16, 17, 16', 17') are provided at a defined distance from each other.

2. Cover according to Claim 1, **characterized in that** an automobile decorative material, such as leather, imitation leather, cloth or the like is provided as the cover material (10).

3. Cover according to Claim 1, **characterized in that** a composite of two material layers firmly connected to each other is provided as the cover material (10), wherein the one material layer consists of an automobile decorative material, such as leather or imitation leather, and the second material layer consists of a foam, spacer knit, nonwoven or the like.

4. Cover according to one of Claims 1 to 3, **characterized in that** the punctures (15, 15') have an elongate extent.

5. Cover according to one of Claims 1 to 3, **characterized in that** the punctures (15, 15')are spaced apart regularly from one another.

6. Cover according to one of Claims 1 to 5, **characterized in that** the punctures (15, 15') are arranged next to one another in a partially compressed form at particularly preferred locations.

7. Cover according to one of Claims 1 to 4, **characterized in that** the punctures (15, 15') have a length extent (l) of 0.1 to 1 mm.

8. Cover according to one of Claims 1 to 5, **characterized in that** the mutual distances (a) between the punctures (15, 15') lie within the order of magnitude of the length extent (1) of the punctures (15, 15').

9. Cover according to one of Claims 1 to 8, **characterized in that** the punctures (15, 15') are arranged on a plurality of weakening geometries (16, 17; 16', 17') lying parallel to one another, wherein the punctures (15, 15') on adjacent weakening geometries (16, 17; 16', 17') are arranged offset with respect to one another.

10. Cover according to one of Claims 1 to 9, **characterized in that** the cover material (10) has a thickness of 0.4 mm to 1.5 mm.

11. Cover according to one of Claims 3, to 10, **characterized in that** the cover material (10) which consists of two material layers firmly
connected to each other has a thickness of 1 mm to 20 mm.

12. Cover according to one of Claims 1 to 11, **characterized in that** two weakening geometries are provided at a distance of 0.5 to 1.0 mm from each other.

13. Method for producing a cover for covering an airbag in the interior of a motor vehicle according to one of Claims 1 to 12, **characterized in that** punctures (15, 15') which are arranged consecutively vertically, are spaced apart from one another and penetrate the cover material (10) are introduced into the cover material from the inside (13) of the cover material (10), in the unlaminated state thereof, in the region which covers the edge of the airbag flap after the cover material (10) is laminated onto the covering of the airbag.

14. Method according to Claim 13, **characterized in that** the punctures (15, 15') are introduced into a composite consisting of two material layers firmly connected to each other, wherein the one layer consists of an automobile decorative material, such as leather or imitation leather, and the second material layer consists of a foam, spacer knit or the like.

15. Method according to either of Claims 13 and 14, **characterized in that** the punctures (15, 15') are introduced with the aid of a puncturing needle (14) which has an elongate point (14.1) in the manner of a knife edge.

16. Method according to Claim 15, **characterized in that** the puncturing needle (14) rotates during the production of a weakening geometry differing from a straight line and is aligned with the desired line direction.

17. Method according to either of Claims 15 and 16, **characterized in that** the puncturing needle (14) is moved forwards puncturing intermittently in a defined high-low movement during the production of a weakening geometry differing from a straight line.

18. Method according to one of Claims 13 to 17, **characterized in that** two parallel weakening geometries are introduced simultaneously into the cover material (10) with the aid of two puncturing needles (14) arranged at a fixed mutual spacing, in particular of 0.5 - 1 mm.

## Revendications

1. Revêtement pour le couvercle d'un airbag dans l'habitacle d'un véhicule automobile, fabriqué en un matériau de revêtement (10) qui présente des entailles (15 ; 15') espacées les unes des autres, disposées les unes derrière les autres dans la région du côté interne (13 ; 13') tourné vers la bordure d'un volet d'airbag, les entailles (15 ; 15') disposées les unes derrière les autres formant une géométrie d'affaiblissement (16, 17 ; 16', 17') s'écartant d'une droite et les entailles (15, 15') traversant le matériau de revêtement (10), **caractérisé en ce que** la géométrie d'affaiblissement est une ligne ondulée (16', 17') et deux géométries d'affaiblissement (16, 17, 16', 17') sont prévues à distance définie l'une de l'autre.

2. Revêtement selon la revendication 1, **caractérisé en ce que** l'on prévoit en tant que matériau de revêtement (10) un matériau décoratif pour automobile, tel que du cuir, du similicuir, de l'étoffe ou similaire.

3. Revêtement selon la revendication 1, **caractérisé en ce que** l'on prévoit en tant que matériau de revêtement (10) un assemblage de deux couches de matériau assemblées fixement l'une à l'autre, l'une des couches de matériau se composant d'un matériau décoratif pour automobile tel que du cuir ou du similicuir et la deuxième couche de matériau
se composant d'une mousse, d'un tissu à mailles d'espacement, d'un non-tissé ou similaire.

4. Revêtement selon l'une quelconque des revendications 1 à 3, **caractérisé en ce que** les entailles (15, 15') sont étendues en longueur.

5. Revêtement selon l'une quelconque des revendications 1 à 3, **caractérisé en ce que** les entailles (15, 15') sont espacées régulièrement les unes des autres.

6. Revêtement selon l'une quelconque des revendications 1 à 5, **caractérisé en ce que** les entailles (15, 15') sont disposées les unes à côté des autres de manière partiellement comprimée à des endroits particulièrement préférables.

7. Revêtement selon l'une quelconque des revendications 1 à 4, **caractérisé en ce que** les entailles (15, 15') présentent une étendue en longueur (1) de 0,1 à 1 mm.

8. Revêtement selon l'une quelconque des revendications 1 à 5, **caractérisé en ce que** les espacements mutuels (a) entre les entailles (15, 15') sont de l'ordre de grandeur de l'étendue en longueur (1) des entailles (15, 15').

9. Revêtement selon l'une quelconque des revendications 1 à 8, **caractérisé en ce que** les entailles (15, 15') sont disposées sur plusieurs géométries d'affaiblissement parallèles les unes aux autres (16, 17 ; 16', 17'), les entailles (15, 15') étant disposées de manière décalée les unes des autres sur des géométries d'affaiblissement adjacentes (16, 17 ; 16', 17').

10. Revêtement selon l'une quelconque des revendications 1 à 9, **caractérisé en ce que** le matériau de revêtement (10) présente une épaisseur de 0,4 mm à 1,5 mm.

11. Revêtement selon l'une quelconque des revendications 3 à 10, **caractérisé en ce que** le matériau de revêtement (10), qui se compose de deux couches de matériau assemblées fixement l'une à l'autre, présente une épaisseur de 1 mm à 20 mm.

12. Revêtement selon l'une quelconque des revendications 1 à 11, **caractérisé en ce que** deux géométries d'affaiblissement sont prévues à une distance de 0,5 à 1,0 mm l'une de l'autre.

13. Procédé de fabrication d'un revêtement pour le couvercle d'un airbag dans l'habitacle d'un véhicule automobile selon l'une quelconque des revendications 1 à 12, **caractérisé en ce que** des entailles (15, 15') espacées les unes des autres, disposées perpendiculairement les unes derrière les autres, sont pratiquées dans le matériau de revêtement, depuis le côté intérieur (13) du matériau de revêtement (10), dans son état non contrecollé, dans la région qui recouvre la bordure du volet d'airbag après le contrecollage du matériau de revêtement (10) sur le couvercle de l'airbag, lesquelles entailles traversent le matériau de revêtement (10).

14. Procédé selon la revendication 13, **caractérisé en ce que** les entailles (15, 15') sont pratiquées dans un assemblage constitué de deux couches de matériau assemblées fixement l'une à l'autre, l'une des couches se composant d'un matériau décoratif pour automobile tel que du cuivre ou du simili cuir et la deuxième couche de matériau se composant d'une moussé, d'un tissu à mailles d'espacement ou similaire.

15. Procédé selon l'une quelconque des revendications 13 ou 14, **caractérisé en ce que** les entailles (15, 15') sont pratiquées à l'aide d'une aiguille à piquer (14) qui présente une pointe allongée de type arête tranchante (14.1).

16. Procédé selon la revendication 15, **caractérisé en ce que** l'aiguille à piquer (14) tourne lors de la fabrication d'une géométrie d'affaiblissement s'écartant d'une ligne droite et s'aligne avec le guidage linéaire souhaité.

17. Procédé selon l'une quelconque des revendications 15 ou 16, **caractérisé en ce que** l'aiguille à piquer (14), lors de la fabrication d'une géométrie d'affaiblissement s'écartant d'une ligne droite, se déplace vers l'avant en perçant de manière intermittente suivant un mouvement défini vers le haut et vers le bas.

18. Procédé selon l'une quelconque des revendications 13 à 17, **caractérisé en ce qu'**à l'aide de deux aiguilles à piquer (14) disposées à une distance mutuelle fixe, en particulier de 0,5 à 1 mm, deux géométries d'affaiblissement parallèles sont pratiquées simultanément dans le matériau de revêtement (10).
